# EUROPÄISCHE PATENTSCHRIFT

(11) **EP 1 985 944 B1**
(45) Veröffentlichungstag und Bekanntmachung des Hinweises auf die Patenterteilung: **17.03.2010**
(21) Anmeldenummer: 07090080.8
(22) Anmeldetag: 23.04.2007
(51) Int. Cl.: F24J 2/04, F24J 2/52, H01L 31/042, H01L 31/048

(54) **Solarmodul- und Solarkollektoranordnung (SolarDach F)**
Solar module and solar panel assembly (SolarDach F)
Installation de module solaire et de collecteur solaire (SolarDach F)

(43) Veröffentlichungstag der Anmeldung: 29.10.2008
(73) Patentinhaber: Mounting Systems GmbH, 15834 Rangsdorf (DE)
(72) Erfinder: Kallup, Maren, 10249 Berlin (DE)
(74) Vertreter: Kietzmann, Manfred

(56) Entgegenhaltungen:
- EP-A- 1 170 806
- DE-A1-102005 061 709
- DE-B3- 10 337 410
- JP-A- 51 150 751
- JP-A- 57 169 545

## Beschreibung

Solarmodule und Solarkollektoren werden neben der Aufdachmontage insbesondere bei Neubaudächern auch als Indachsystem montiert. Das System ermöglicht eine optisch elegante und preiswerte Variante, Dacheindeckungen und solare Energieerzeugung zu kombinieren. Dabei werden Solarkollektoren oder Solarmodule direkt in das Dach integriert.

Die Module oder Kollektoren werden nach bewährter Schindeltechnik in Horizontalprofilen sicher und dicht befestigt. An allen Auflageflächen, Zwischenräumen und sonstigen Angriffsbereichen wird das Modul oder der Kollektor durch witterungsbeständige Dichtungen (EPDM) gesichert. So soll gewährleistet werden, dass auch das Indachsystem regendicht ist.

Ein entsprechendes System zur Befestigung von plattenförmigen Bauteilen, insbesondere von Solarmodulen und Sonnenkollektoren ist in der EP 0 761 901 B1 beschrieben. Hier kommen im Prinzip doppelt-U-förmig ausgebildete Längsträger mit einem breiten als Auflage und als Regenabfluss dienenden, nach innen gekröpften Mittelsteg zum Einsatz, auf denen benachbarte Solarmodule aufliegen, wobei die Längsträger in Richtung Dachfirst zusammensteckbar sind. Haken in Dachquerrichtung sichern die Module gegen Verrutschen und gewährleisten das schindelförmige Übereinandergreifen der Module. Anwendung findet dieses System bei einer Dachneigung > 23°.

Aus der DE 20 2006 006 144 U1 ist ferner eine Kollektoreinheit mit Befestigungsvorrichtung bekannt geworden, die sowohl als Indach- als auch als Aufdachsystem einsetzbar ist.

Unterhalb des Solarkollektors ist hier ein ebenes Unterblech angeordnet, das mit benachbarten Unterblechen regendicht über Falze verbindbar ist. Der Solarkollektor selbst wird über eine obere und untere Halteschiene mit dem Unterblech vorzugsweise über Druckfügen verbunden.

Eine Solarmodul- und Kollektoranordnung nach dem Oberbegriff von Anspruch 1 ist aus der EP-A-1 170 806 bekannt.

Generell steht bei Indachsystem das technische Problem der Hinterlüftung der Module/Kollektoren, um Überhitzungen zu vermeiden. Ferner erfordert die regendichte Abdichtung ein hohes Maß an Passfähigkeit der angeordneten Module/Kollektoren und gleichzeitig eine lange Lebensdauer der eingesetzten Dichtungen.

Aufgabe der Erfindung ist es, eine Indachmontage zu realisieren, die die Vorzüge einer geschlossenen Dachhaut, wie sie bei Aufdachsystemen verwendet wird, in sich einschließt.

Gelöst wird diese Aufgabe mit den Merkmalen des Anspruches 1, vorteilhafte Ausgestaltungen sind Gegenstand der Unteransprüche.

Die erfindungsgemäße Solarmodul- und Solarkollektoranordnung sieht eine Ausnehmung in der Dachhaut von annähernd der Größe der mit Solarmodulen- oder Solarkollektoren auszurüstenden Fläche vor, wobei diese Fläche mit einer plattenförmigen Dacheindeckung mit in First-Traufe-Richtung verlaufender Profilierung versehen ist und diese Dacheindeckung mit der Dachhaut regendicht verbunden ist, in die Profilierungen senkrecht zur First-Traufe-Richtung eine oder mehrere Abschnitte einer Adapterschiene eingesetzt und mit der Dacheindeckung verbunden sind, wobei
- die Adapterschiene auf der Dachseite ein Negativprofil zur Profilierung der Dacheindeckung aufweist,
- die Adapterschiene über eine oder mehrere Anschlussprofile verfügt zur Herstellung einer Verbindung mit einer Trägerprofilschiene und
- oben auf der Trägerprofilschiene der Solarmodul oder Solarkollektor montierbar ist.

Die Adapterschiene wird entweder mit einem Anschlussprofil für eine Trägerprofilschienenanordnung quer zur First-Traufe-Richtung versehen oder die Adapterschiene weist ein Anschlussprofil für eine Trägerprofilschienenanordnung in First-Traufe-Richtung auf.

Bei der Trägerprofilschienenanordnung quer zur First-Traufe-Richtung besteht das Anschlussprofil aus mindestens einem Paar zueinander gekröpften oben an der Adapterschiene angeordneten Längsstegen in First-Traufe-Richtung verlaufend, wobei die gekröpften Längsstege einen Seitensteg einer Trägerprofilschiene formschlüssig aufnehmen.

In einer bevorzugten Ausführung ist die Oberseite der Adapterschiene zwischen den gekröpften Längsstegen eben, so dass der Seitensteg der Trägerprofilschiene aufliegen kann.

Durch ein Befestigungsmittel wird die Trägerprofilschiene gegen Herausrutschen des Längssteges aus dem Raum zwischen den gekröpften Längsstegen der Adapterschiene gesichert.

In einer speziellen Ausführung können die Kröpfungen der -Längsstege der Adapterschiene miteinander verbunden sein, so dass ein Aufnahmeschlitz für den Seitensteg der Trägerprofilschiene besteht.

Bei der Adapterschiene mit einem Anschlussprofil für eine Trägerprofilschienenanordnung in First-Traufe-Richtung besteht das Anschlussprofil aus Längsstegen vorzugsweise mit Kröpfungen in First-Traufe-Richtung oben auf der Adapterschiene und bevorzugt in einem Tal der Profilierung der Adapterschiene, so dass eine Trägerprofilschiene mit entsprechenden Längsstegen und Kröpfungen in das Anschlussprofil unter Formschluss einschiebbar oder einrastbar ist.

Ferner sieht eine vorteilhafte Ausgestaltung vor, dass die Adapterschienen im Bereich der Täler der Dacheindeckung Durchbrüche aufweist. Diese können innerhalb der Adapterschienen angeordnet sein oder die Adapterschienen können in Dachrichtung im Bereich der Durchbrüche auch offen sein. So wird eine Luftzirkulation unterhalb des Moduls/Kollektors gewährleistet und der Regenwasserabfluss wird nicht behindert.

Die Adapterschiene(n) selbst kann über die gesamte Breite der Dacheindeckung vorgesehen sein oder nur abschnittsweise, dann bevorzugt mindestens zwei Berge der Profilierung der Dacheindeckung übergreifend.

Die vorgeschlagene Anordnung weist eine Reihe von Vorteilen auf.

Durch die separate Dacheindeckung mit handelsüblicher Profilierung (wellenförmig, trapezförmig, rechteckförmig) wird kostengünstig ein sicherer Schutz des Daches erreicht insbesondere in Bezug auf die Regen- und Schneedichtheit. Die Dachabdichtung muss also nicht mehr über die Module/Kollektoren gewährleistet werden.

Die eingesetzte Adapterschiene gewährleistet eine stabile Auflage auf der Dachprofilierung (Negativprofil) und ist auf den Bergen der Profilierung fixierbar, ohne dass die Dacheindeckung Gefahr läuft, undicht zu werden.

Die Trägerprofilschiene lässt sich einfach an die Adapterschiene anschließen, wobei bisher verwendete Anschlussmittel zur Verbindung Trägerprofilschiene-Modul/Kollektor weiter nutzbar sind.

Die Trägerprofilschiene braucht für die Ausführung mit einem Anschlussprofil für eine Trägerprofilschienenanordnung quer zur First-Traufe-Richtung im Strangpressverfahren nur um einen zusätzlichen Steg erweitert werden. Möglich ist aber auch, bisher vorgesehene Anschlussmöglichkeiten an den Trägerprofilschienen für die Befestigung der Trägerprofilschiene an der Adapterschiene zu nutzen.

Eine vorgeschlagene Adapterschiene ist im Strangpressverfahren kostengünstig als Profil herstellbar, da alle Formänderungen in Profillängsrichtung verlaufen. Je nach vorgesehener Schienenbreite erfolgt dann ein Ablängen vom Profil. Das ist auch die Ursache dafür, dass die Längsstege der Anschlussprofile der Adapterschienen jeweils über die volle Breite der Adapterschienen verlaufen.

Bevorzugte Ausführungsbeispiele sind in den Zeichnungen dargestellt. Es zeigen:
- Fig. 1:: die Anordnung in einem Dach bei einer Querdachmontage,
- Fig. 2:: die Adapterschiene mit Querdachanschlussprofilen und
- Fig. 3:: die Adapterschiene mit Hochkantanschlussprofilen.

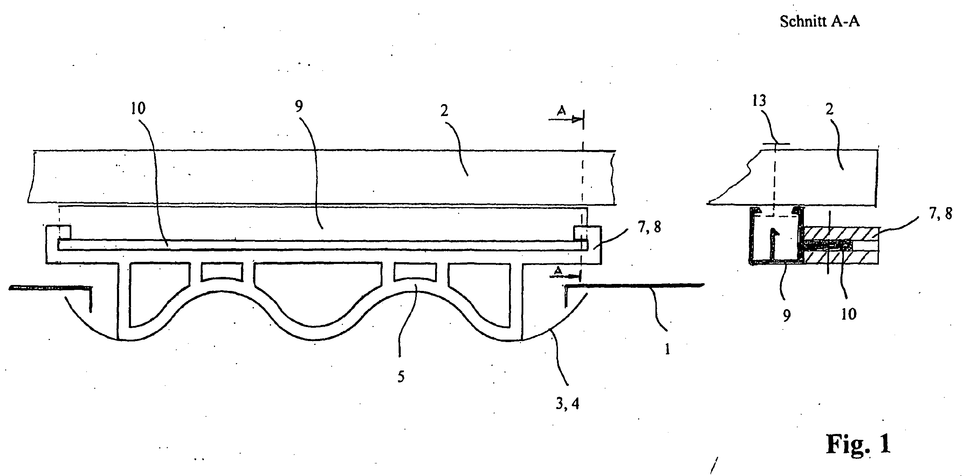

**Fig. 1** zeigt die Solarmodul- und Solarkollektoranordnung als Indachlösung. Die Dachhaut 1 weist eine Ausnehmung von annähernd der Größe der mit Solarmodulen- oder Solarkollektoren 2 auszurüstenden Fläche auf. Diese Fläche ist mit einer plattenförmigen Dacheindeckung 3 mit in First-Traufe-Richtung verlaufender Profilierung 4 versehen. Hier ist die Profilierung 4 der Dacheindeckung 3 wellenförmig ausgebildet. Ebenso vorteilhaft sind auch trapezförmig oder rechteckig ausgebildete Profilierung 4.

Die Dacheindeckung 3 ist mit der Dachhaut 1 regendicht verbunden.

Auf der Dacheindeckung 3 ist die Adapterschiene 5 angeordnet und mit der Dacheindeckung 3 verbunden. An der Adapterschiene 5 wird die Trägerprofilschiene 9 angeordnet, auf der oben der Solarmodul oder Solarkollektor 2 aufliegt und über Befestigungsmittel 13 mit der Trägerprofilschiene 9 verbunden ist.

Die Adapterschiene 5 besitzt auf der Dachseite ein Negativprofil zur Profilierung 4 der Dacheindeckung, so dass sie formschlüssig in der Dachprofilierung aufliegt. Ferner weist die Adapterschiene 5 Durchbrüche 6 im Bereich der Täler der Profilierungen 4 der Dacheindeckung 3 auf, so dass Regenwasser in den Tälern der Profilierung 4 ablaufen kann und eine Hinterlüftung der Module/Kollektoren 2 erfolgt. Die Außenwanddicke der Durchbrüche 6 beträgt nur wenige Millimeter und kann im unteren Talbereich sogar 0 sein, d. h. die Durchbrüche 6 sind hier offen.

Neben dieser der Dachfunktion entsprechenden Ausgestaltung wird durch die Durchbrüche 6 auch Material gespart und die Schienen werden leichter.

Die Adapterschienenlänge ist so bemessen, dass die Adapterschiene 5 mindestens zwei Berge der Profilierung 4 der Dacheindeckung 3 übergreift. Die Adapterschiene 5 liegt so stabil auf der Dacheindeckung 3 auf und es wird eine gute Kräfteverteilung erzielt.

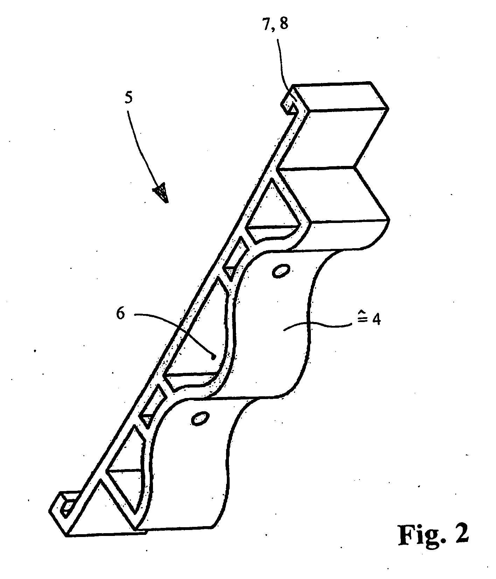

Die in **Fig. 1** und **2** verwendete Adapterschiene 5 weist Querdachanschlussprofile auf, d.h. die Adapterschiene 5 ist mit einem Anschlussprofil 7 für eine Trägerprofilschienenanordnung quer zur First-Traufe-Richtung versehen. Das Anschlussprofil 7 besteht aus mindestens einem Paar zueinander gekröpften oben und seitlich an der Adapterschiene 5 angeordneten Längsstegen 8 in First-Traufe-Richtung verlaufend. Zwischen diese Längsstege 8 wird der Seitensteg 10 der Trägerprofilschiene 9 formschlüssig eingeschoben und festgelegt. Schnitt A-A zeigt dies anschaulich.
Die Oberseite der Adapterschiene 5 ist zwischen den Längsstegen 8 eben, so dass der Seitensteg 10 aufliegen kann.

Angedeutet wird, dass die Trägerprofilschiene 9 über die Anschlüsse z. B. für eine Aufdachmontage verfügt. Wir verweisen in diesem Zusammenhang auf die Montagesysteme u. a. nach DE 10 2005 001 653 A1 oder DE 10 2005 001 654 A1.

Anstelle des Steges 8 kann auch auf die bei der Aufdachmontage der vorgenannten Montagesysteme eingesetzten Verbindungselemente für die Verbindung Dachhaken - Trägerprofilschiene zurückgegriffen werden. Auch diese sind, da in Trägerprofilschienenlängsrichtung verlaufend, mittels des Strangpressens herstellbar.

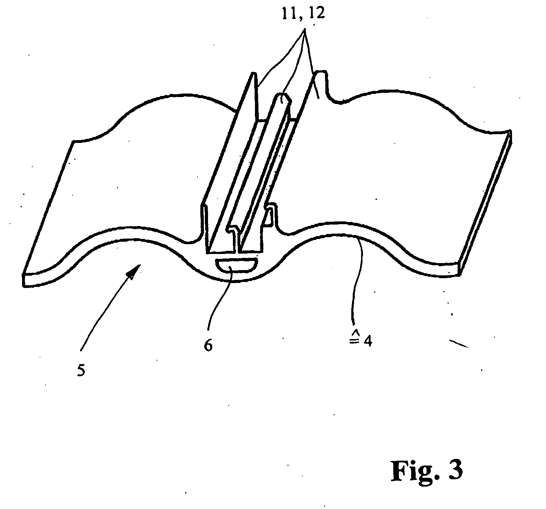

Die in **Fig. 3** verwendete Adapterschiene 5 weist Hochkantanschlussprofile auf, d.h. die Adapterschiene 5 ist mit einem Anschlussprofil 11 für eine Trägerprofilschienenanordnung in First-Traufe-Richtung versehen ist, wobei das Anschlussprofil 11 aus Längsstegen 12 in First-Traufe-Richtung oben auf der Adapterschiene 5 mit Kröpfungen besteht, so dass eine Trägerprofilschiene 9 mit entsprechenden Längsstegen und Kröpfungen in das Anschlussprofil unter Formschluss einschiebbar oder einrastbar ist.

Die Adapterschienenlänge ist auch hier so bemessen, dass die Adapterschiene 5 mindestens zwei Berge der Profilierung 4 der Dacheindeckung 3 übergreift.

Ferner weist diese Adapterschiene 5 Durchbrüche 6 im Bereich der Täler der Profilierungen 4 der Dacheindeckung 3 auf, so dass Regenwasser in den Tälern der Profilierung 4 ablaufen kann und eine Hinterlüftung der Module/Kollektoren 2 erfolgt.

Mit den vorgeschlagenen Adaptern wird somit ein wesentlicher Schritt in Richtung der Nutzung von Aufdachsystemen auch als Indachlösung vollzogen.

### Bezugszeichenliste

- 1: Dachhaut
- 2: Solarmodule/Solarkollektoren
- 3: plattenförmige Dacheindeckung
- 4: Profilierung
- 5: Adapterschiene
- 6: Durchbrüche
- 7: Anschlussprofil Querdachmontage
- 8: Längsstege
- 9: Trägerprofilschiene
- 10: Seitensteg der Trägerprofilschiene
- 11: Anschlussprofil Hochkantmontage
- 12: Längsstege
- 13: Solarmodulbefestigungsmittel

## Patentansprüche

1. Solarmodul- und Solarkollektoranordnung bestehend aus einer Ausnehmung in der Dachhaut(1) von annähernd der Größe der mit Solarmodulen- oder Solarkollektoren (2) auszurüstenden Fläche, wobei diese Fläche mit einer plattenförmigen Dacheindeckung (3) mit in First-Traufe-Richtung verlaufender Profilierung (4) versehen ist und diese Dacheindeckung (3) mit der Dachhaut (1) regendicht verbunden ist, in die Profilierungen (4) senkrecht zur First-Traufe-Richtung eine oder mehrere Abschnitte einer Adapterschiene (5) eingesetzt und mit der Dacheindeckung (3) verbunden sind,
**dadurch gekennzeichnet, dass**
- die Adapterschiene (5) auf der Dachseite ein Negativprofil zur Profilierung (4) der Dacheindeckung (3) aufweist,
- die Adapterschiene (5) über eine oder mehrere Anschlüssprofile (7, 11) verfügt zur Herstellung einer Verbindung mit einer Trägerprofilschiene (9) und
- oben auf der Trägerprofilschiene (9) der Solarmodul oder Solarkollektor (2) montierbar ist.

2. Solarmodul- und Solarkollektoranordnung nach Anspruch 1, **dadurch gekennzeichnet, dass**
die Profilierung (4) der Dacheindeckung (3) wellenförmig oder trapezförmig oder rechteckig ausgebildet ist.

3. Solarmodul- und Solarkollektoranordnung nach Anspruch 1 oder 2, **dadurch gekennzeichnet, dass**
die Adapterschiene (5) Durchbrüche (6) im Bereich der Täler der Profilierungen (4) der Dacheindeckung (3) besitzt.

4. Solarmqdul- und Solarkollektoranordnung nach Anspruch 3, **dadurch gekennzeichnet, dass**
die Durchbrüche (6) in Richtung Dacheindeckung (3) offen sind.

5. Solarmodul- und Solarkollektoranordnung nach einem der Ansprüche 1 bis 4, **dadurch gekennzeichnet, dass**
die Adapterschiene (5) mit einem Anschlussprofil (7) für eine Trägerprofilschienenanordnung quer zur First-Traufe-Richtung versehen ist, wobei das Anschlussprofil (7) aus mindestens einem Paar zueinander gekröpften oben an der Adapterschiene angeordneten Längsstegen (8) in First-Traufe-Richtung verlaufend besteht, die einen Seitensteg (10) einer Trägerprofilschiene (9) formschlüssig aufnehmen.

6. Solarmodul- und Solarkollektoranordnung nach Anspruch 5, **dadurch gekennzeichnet, dass**
die Längsstege (8) die Adapterschiene (5) an beiden Seiten abschließen.

7. Solarmodul- und Solarkollektoranordnung nach Anspruch 5 oder 6, **dadurch gekennzeichnet, dass**
die Oberseite der Adapterschiene (5) zwischen den Längsstegen (8) eben ist, so dass der Seitensteg (10) aufliegen kann.

8. Solarmodul- und Solarkollektoranordnung nach einem der Ansprüche 5 bis 7, **dadurch gekennzeichnet, dass**
die Kröpfungen der Längsstege (8) miteinander verbunden sind, so dass ein Aufnahmeschlitz für den Seitensteg (10) der Trägerprofilschiene (9) besteht.

9. Solarmodul- und Solarkollektoranordnung nach einem der Ansprüche 1 bis 4, **dadurch gekennzeichnet, dass**
die Adapterschiene (5) mit einem Anschlussprofil (11) für eine Trägerprofilschienenanordnung in First-Traufe-Richtung versehen ist, wobei das Anschlussprofil (11) aus Längsstegen (12) in First-Traufe-Richtung oben auf der Adapterschiene (5) mit Kröpfungen besteht, so dass eine Trägerprofilschiene (9) mit entsprechenden Längsstegen und Kröpfungen in das Anschlussprofil unter Formschluss einschiebbar oder einrastbar ist.

10. Solarmodul- und Solarkollektoranordnung nach Anspruch 9, **dadurch gekennzeichnet, dass**
das Anschlussprofil (11) oben in einem Tal der Profilierung der Adapterschiene (5) angeordnet ist.

11. Solarmodul- und Solarkollektoranordnung nach einem der Ansprüche 1 bis 10, **dadurch gekennzeichnet, dass**
die Längsstege (8, 12) der Anschlussprofile (7, 11) über die volle Breite der Adapterschienen (5) verlaufen.

12. Solarmodul- und Solarkollektoranordnung nach einem der Ansprüche 1 bis 11, **dadurch gekennzeichnet, dass**
die Adapterschienenlänge (2) so bemessen ist, dass die Adapterschiene (5) mindestens zwei Berge der Profilierung (4) der Dacheindeckung (3) übergreift.

13. Solarmodul- und Solarkollektoranordnung nach einem der Ansprüche 1 bis 12, **dadurch gekennzeichnet, dass**
die Adapterschienen (5) über Mittel verfügen, um die formschlüssig eingepasste Trägerprofilschiene (9) festzulegen.

## Claims

1. Solar-module-and-solar-collector arrangement, consisting of a recess in the roof waterproofing (1) having approximately the same size as the area to be equipped with solar modules or solar collectors (2), wherein this area is provided with a plate-shaped roof covering (3) with a profiled shape (4), said profiled shape (4) running in the roofridge-eaves direction, and this roof covering (3) is connected to the roof waterproofing (1) in a rain-proof manner, one or several portions of an adapter rail (5) are inserted into the profiled shapes (4) perpendicularly to the roofridge-eaves direction and are connected to the roof covering (3), **characterized in that**
- the adapter rail (5) has, on the roof side, a profile that is negative relative to the profiled shape (4) of the roof covering (3);
- the adapter rail (5) has one or several connecting profiles (7, 11) for establishing a connection to a support profile rail (9); and
- the solar module or solar collector (2) is mountable on top of the support profile rail (9).

2. Solar-module-and-solar-collector arrangement according to claim 1, **characterized in that**
the profiled shape (4) of the roof covering (3) is wavy or trapezoidal or rectangular.

3. Solar-module-and-solar-collector arrangement according to claim 1 or 2, **characterized in that**
the adapter rail (5) has openings (6) in the region of the valleys of the profiled shapes (4) of the roof covering (3).

4. Solar-module-and-solar-collector arrangement according to claim 3, **characterized in that**
the openings (6) are open towards the roof covering (3).

5. Solar-module-and-solar-collector arrangement according to any one of claims 1 to 4, **characterized in that**
the adapter rail (5) is provided with a connecting profile (7) for a support profile rail arrangement running transversely to the roofridge-eaves direction, wherein the connecting profile (7) consists of at least one pair of longitudinal webs (8) that are bent at right angles towards each other and arranged at the top of the adapter rail and run in the roofridge-eaves direction, said longitudinal webs (8) form-fittingly receiving a lateral web (10) of a support profile rail (9).

6. Solar-module-and-solar-collector arrangement according to claim 5, **characterized in that**
the longitudinal webs (8) terminate the adapter rail (5) on both sides.

7. Solar-module-and-solar-collector arrangement according to claim 5 or 6, **characterized in that**
the top side of the adapter rail (5) is plane between the longitudinal webs (8) so that the lateral web (10) can rest thereon.

8. Solar-module-and-solar-collector arrangement according to any one of claims 5 to 7, **characterized in that**
the right-angle bends of the longitudinal webs (8) are connected to each other so that there is a locating slot for the lateral web (10) of the support profile rail (9).

9. Solar-module-and-solar-collector arrangement according to any one of claims 1 to 4, **characterized in that**
the adapter rail (5) is provided with a connecting profile (11) for a support profile rail arrangement running in the roofridge-eaves direction, wherein the connecting profile (11) consists of longitudinal webs (12) that run in the roofridge-eaves direction on top of the adapter rail (5) and have right-angle bends so that a support profile rail (9) with corresponding longitudinal webs and right-angle bends can be form-fittingly pushed or locked into place in the connecting profile.

10. Solar-module-and-solar-collector arrangement according to claim 9, **characterized in that**
the connecting profile (11) is arranged at the top of a valley of the profiled shape of the adapter rail (5).

11. Solar-module-and-solar-collector arrangement according to any one of claims 1 to 10, **characterized in that**
the longitudinal webs (8, 12) of the connecting profiles (7, 11) extend over the full width of the adapter rails (5).

12. Solar-module-and-solar-collector arrangement according to any one of claims 1 to 11, **characterized in that**
the adapter rail length (2) is dimensioned such that the adapter rail (5) spans at least two peaks of the profiled shape (4) of the roof covering (3).

13. Solar-module-and-solar-collector arrangement according to any one of claims 1 to 12, **characterized in that**
the adapter rails (5) have means for arresting the form-fittingly fitted support profile rail (9).

## Revendications

1. Dispositif de module solaire et de capteur solaire, composé d'un évidement dans la toiture (1) ayant à peu près la dimension de la surface à équiper avec des modules solaires ou des capteurs solaires (2), cette surface étant munie d'une couverture de toit (3) en forme de plaque avec un profilage (4) placé dans la direction de la gouttière de faîtage, et cette couverture de toit (3) étant raccordée à la toiture (1) de façon étanche à la pluie, un ou plusieurs tronçons d'un rail d'adaptation (5) étant insérés dans les profilages (4) perpendiculairement à la direction de la gouttière de faîtage et étant raccordés à la couverture de toit (3),
**caractérisé en ce que**
- le rail d'adaptation (5) sur le côté de toit présente un profil négatif par rapport au profilage (4) de la couverture de toit (3),
- le rail d'adaptation (5) dispose d'un ou de plusieurs profilés de raccordement (7, 11) pour la réalisation d'un raccordement avec un rail profilé porteur (9) et
- peut être monté en haut sur le rail profilé porteur (9) du module solaire ou du capteur solaire (2).

2. Dispositif de module solaire et de capteur solaire selon la revendication 1,
**caractérisé en ce que**
le profilage (4) de la couverture de toit (3) est constitué de façon ondulée ou trapézoïdale ou rectangulaire.

3. Dispositif de module solaire et de capteur solaire selon la revendication 1 ou 2,
**caractérisé en ce que**
le rail d'adaptation (5) possède des percées (6) dans la zone des creux des profilages (4) de la couverture de toit (3).

4. Dispositif de module solaire et de capteur solaire selon la revendication 3, **caractérisé en ce que**
les percées (6) sont ouvertes en direction de la couverture de toit (3).

5. Dispositif de module solaire et de capteur solaire selon une des revendications 1 à 4, **caractérisé en ce que**
le rail d'adaptation (5) est muni d'un profilé de raccordement (7) pour un dispositif de rail profilé porteur transversalement à la direction de gouttière de faîtage, le profilé de raccordement (7) se composant d'au moins une paire de nervures longitudinales (8) coudées l'une par rapport à l'autre disposées en haut sur le rail d'adaptation courant dans la direction de la gouttière de faîtage et qui reçoivent en liaison de forme une nervure latérale (10) d'un rail profilé porteur (9).

6. Dispositif de module solaire et de capteur solaire selon la revendication 5, **caractérisé en ce que**
les nervures longitudinales (8) terminent le rail d'adaptation (5) sur les deux côtés.

7. Dispositif de module solaire et de capteur solaire selon la revendication 5 ou 6, **caractérisé en ce que**
le côté supérieur du rail d'adaptation (5) est plat entre les nervures longitudinales (8) de sorte que la nervure latérale (10) peut reposer à plat.

8. Dispositif de module solaire et de capteur solaire selon une des revendications 5 à 7, **caractérisé en ce que**
les coudes des nervures longitudinales (8) sont raccordés entre eux de sorte qu'il se forme une fente de réception pour la nervure latérale (10) du rail profilé porteur (9).

9. Dispositif de module solaire et de capteur solaire selon une des revendications 1 à 4, **caractérisé en ce que**
le rail d'adaptation (5) est muni d'un profilé de raccordement (11) pour un dispositif de rail profilé porteur dans la direction de la gouttière de faîtage, le profilé de raccordement (11) se composant de nervures longitudinales (12) dans la direction de gouttière de faîtage en haut sur le rail d'adaptation (5) avec des coudes de sorte qu'un rail profilé porteur (9) avec des nervures longitudinales et des coudes correspondants peut être inséré ou encliqueté dans le profilé de raccordement par liaison de forme.

10. Dispositif de module solaire et de capteur solaire selon la revendication 9, **caractérisé en ce que**
le profilé de raccordement (11) est disposé en haut dans un creux du profilage du rail d'adaptation (5).

11. Dispositif de module solaire et de capteur solaire selon une des revendications 1 à 10, **caractérisé en ce que**
les nervures longitudinales (8, 12) des profilés de raccordement (7, 11) courent sur toute la largeur des rails d'adaptation (5).

12. Dispositif de module solaire et de capteur solaire selon une des revendications 1 à 11, **caractérisé en ce que**
la longueur de rail d'adaptation (2) est dimensionnée de sorte que le rail d'adaptation (5) englobe au moins deux sommets du profilage (4) de la couverture de toit (3).

13. Dispositif de module solaire et de capteur solaire selon une des revendications 1 à 12, **caractérisé en ce que**
les rails d'adaptation (5) disposent de moyens pour fixer le rail profilé porteur (9) qui est emboîté par liaison de forme.
